# FASCICULE DE BREVET EUROPEEN

(11) **EP 1 273 208 B1**
(45) Date de publication et mention de la délivrance du brevet: **14.01.2004**
(21) Numéro de dépôt: 01921429.5
(22) Date de dépôt: 26.03.2001
(51) Int. Cl.: H05B 33/08, A47G 19/22

(54) **ARTICLES LUMINEUX JETABLES, NOTAMMENT VERRES ET AUTRES ARTICLES POUR LA FETE OU AUTRES APPLICATIONS**
LEUCHTENDE UND WEGWERFBARE VORRICHTUNG, INS BESONDERE GLÄSER UND ANDERE VORRICHTUNGEN ZUM FEIERN UND ÄHNLICHE ANWENDUNGEN
LIGHT-EMITTING ARTICLES, IN PARTICULAR GLASSES AND OTHER ARTICLES FOR PARTIES AND OTHER USES

(30) Priorité: 29.03.2000 FR 0004243
(43) Date de publication de la demande: 08.01.2003
(73) Titulaire: Mermaz, Christophe, Luton, Bedfordshire LU3 1RJ (GB); Pecquet, Dominique, 74250 Fillinges (FR)
(72) Inventeur: Mermaz, Christophe, Luton, Bedfordshire LU3 1RJ (GB); Pecquet, Dominique, 74250 Fillinges (FR)
(86) Numéro de dépôt international: PCT/FR2001/000914
(87) Numéro de publication internationale: WO 2001/074120

(56) Documents cités:
- GB-A- 2 135 536
- US-A- 3 737 647
- US-A- 4 029 991
- US-A- 4 922 355
- US-A- 5 339 548
- US-A- 5 624 177
- FAIRCHILD SEMICONDUCTOR: "BCV27 NPN Darlington Transistor" 1997 , USA XP002151217 le document en entier
- PHILIPS SEMICONDUCTORS: "BC517 NPN Darlington transistor, product specification" 23 avril 1999 (1999-04-23) , NETHERLANDS XP002151218 page 2 -page 3

## Description

### Secteur technique de l'invention:

La présente invention concerne le secteur technique des articles jetables destinés notamment à la fête ou à tout autre usage, comme indiqué ci-dessous en détail, et possédant la caractéristique d'être lumineux au moins temporairement.

L'invention concerne en particulier, mais à titre non limitatif, des verres et autres récipients pour boissons, jetables.

### Art antérieur:

On connaît dans l'art antérieur le brevet FR 2 772 886 qui décrit un verre lumineux dont le pied comporte un système lumineux interchangeable encastré, à pile, ampoule électrique et réflecteur.

On connaît encore le brevet USP 4 922 355 qui décrit une chope dont la base comporte le même genre de système que le document précédent, avec de plus une activation allumé / éteint par des contacts 34, 36 fermant le circuit en présence de liquide, ou par le contact de la main sur la poignée.

Le brevet EP 0 231 471 décrit une coupe du même type que les précédents, c'est-à-dire dont le pied comporte un élément amovible lumineux commandé par un interrupteur.

Enfin, le brevet FR 98 03856 décrit une coupe dont le pied comporte, comme les précédents, mais avec des améliorations techniques comme une LED ou des bossages permettant de piéger le liquide résiduel, un système lumineux amovible logé dans le pied et comportant la pile et la LED notamment.

Ces systèmes ont en commun le fait de comporter un système lumineux amovible logé dans la base ou le pied d'un récipient. Il est évident que les piles sont destinées à être changées lorsque leur énergie est épuisée.

On connaît encore un verre jetable décrit dans la demande de brevet français n° 0000 429 du 13/01/00 au nom du Demandeur, et dans lequel on dispose, par collage par une colle alimentaire ou par enrobage de résine alimentaire, un module autonome lumineux. Ce système est jetable, mais il n'est pas facilement adaptable à tout type de verre, il peut être disgracieux au fond de certains verres, et il exige une opération séparée de fabrication (collage ou résine) qui grève le coût du produit fini, dans un domaine où les marges sont extrêmement faibles. De plus, sa durée de vie au stockage est relativement limitée car sa consommation même en stock ou entre deux usage n'est pas nulle ; de tels objets doivent donc être vendus et utilisés dans un laps de temps relativement court. Ce dernier point pose un réel problème, surtout si l'on prend en compte le besoin impératif de parvenir à un prix de revient extrêmement faible, et ceci explique sans doute pourquoi, à la connaissance du Demandeur, de dispositif constitue la seule tentative connue pour concevoir un verre jetable.

Il existe encore de nombreuses publications sur le sujet, qui sont encore plus manifestement restées à l'état de projet technique théorique irréalisable et/ou non rentable, et :ou non industrialisable, et/ou non commercialisable (encombrement, esthétique, coût, etc...) et qui ne sont donc pas pris en considération au titre de l'art antérieur.

On ne sait donc pas à ce jour réaliser de systèmes lumineux qui soient à la fois de petites dimensions ou de très petite dimension, qui soient jetables c'est-à-dire non destinés a être rechargés, dont le coût de fabrication reste faible et qui de plus soient capables de rester stockés soit en cartons soit entre deux usages chez l'acheteur, durant de très longues durées.

Par « petites ou très petites dimensions » on désigne ici des dimensions telles qu'elles sont compatibles avec un logement du système dans un petit volume comme un pied de verre, un briquet, de petits éléments de décoration y compris portables sur les vêtements, etc....

Par « stockage de très longue durée », on entend ici des durées de stockage en cartons de l'ordre de 2 ans (qui correspond en général à la garantie constructeur) ou plus de deux ans, avec maintien de la totalité de l'énergie initiale, par comparaison avec les systèmes connus actuels de ce type qui, au terme de seulement une année, ont déjà perdu, même dans les meilleures conditions de stockage, la moitié de leur énergie, et la totalité au terme de 18 ou 24 mois. Les systèmes connus perdent également rapidement leur énergie entre deux usages par l'utilisateur.

Il existe donc un besoin important et reconnu des professionnels commercialisant de tels objets « festifs » et analogues pour dees articles jetables lumineux correspondant aux critères ci-dessus, dont on aura compris que certains sont contradictoires ou incompatibles entre eux, ce qui explique l'absence de tels produits sur le marché.

### Résumé de l'invention:

Le mérite du Demandeur est d'avoir vaincu les préjugés rappelés ci-dessus, et d'avoir conçu et mis au point un dispositif lumineux de petite ou très petite dimension, jetable, de très longue durée de vie au stockage avant ou après achat, ci-après « au stockage et hors usage », et adaptable à toutes sortes d'articles festifs ou non, comme des verres, des briquets, des articles décoratifs d'intérieur ou d'extérieur, etc..., dont une liste non limitative sera donnée ci-dessous.

### Description détaillée de l'invention:

L'invention concerne donc un dispositif lumineux 1 autonome de petite ou très petite dimension, adaptable ou intégrable à des articles 2 de toutes sortes, du type comportant au moins une source lumineuse 3, au moins une électronique 4 intégrée de commande, et au moins une source d'énergie 5, caractérisé en ce que ladite électronique de commande comprend un moyen 6 réduisant la consommation d'énergie de ladite électronique et du ou desdits élément(s) lumineux, et autres composants éventuels du dispositif, au stockage et hors usage, à une valeur nulle, et éventuellement un moyen 7 réduisant aussi leur inertie à l'allumage après période de non utilisation, et en ce qu'il comporte un moyen 8 commandant l'allumage et l'extinction du ou desdites sources lumineuses en réponse à des excitations extérieures, par exemple par l'intermédiaire de capteur(s) 19.

Le dispositif est de préférence logé dans au moins un boîtier 20.

Selon un mode de réalisation préféré, l'électronique 4 comporte également des moyens 9 accessoires de temporisation d'allumage et / ou d'extinction, de modulation de l'intensité lumineuse comme pour réaliser des scintillations, des éclairs, et effets spéciaux analogues, éventuellement en réaction (par un ou plusieurs capteur(s) 10) à des stimulations sonores et/ou visuelles et/ou thermiques etc...., extérieures, comme par exemple synchronisation avec l'intensité sonore et/ou lumineuse ambiante, et effets analogues.

Selon un mode de réalisation particulier, ces capteurs 10 sont des capteurs d'intensité ou de contraste lumineux, de fréquences sonores comme un claquement de doigts, ou le niveau sonore ambiant, ou de variation de tels paramètres extérieurs, et sont bien connus de l'homme de métier.

Les capteurs 19 peuvent être tout type de capteur capable d'envoyer un signal vers l'électronique 4 et plus précisément le module d'allumage /extinction 8. Ce sont par exemple des capteurs d'humidité, de chaleur, ou des contacts fermant le circuit en présence d'un liquide conducteur, et analogues.

Selon un mode de réalisation préféré, les capteurs 19 et / ou 10 sont déportés à la surface de l'article 2 ou à proximité de la surface dudit article.

Par consommation d'énergie nulle ou quasi nulle, on désigne ici des valeurs de consommation au stockage et hors usage qui sont soit nulles, soit extrêmement faibles, de l'ordre de 0,000 A / h à 0,00001 A / h, soit quelques microampères / h ,et autorisant les durées de vie énoncées ci-dessus.

Selon un mode de réalisation préféré, ledit moyen comprend un transistor « darlington ».

On rappellera qu'un transistor darlington est un transistor qui permet de commuter un courant important avec un courant de commande très faible (double transistor grand gain).

Ce transistor est connu depuis au moins 20 ans, mais nul n'a songé à l'utiliser dans le présent contexte, et c'est le mérite du Demandeur d'avoir sélectionné ce composant pour en permettre des applications surprenantes et qui résolvent le problème technique posé depuis longtemps, et resté non résolu malgré une demande manifeste.

Selon un mode de réalisation préféré, ledit transistor darlington est polarisé par des composants électroniques sélectionnés et agencés pour le maintenir en état de blocage au stockage ou hors usage du dispositif, avec par conséquent conduction nulle.

On connaît dans l'art antérieur des montages électroniques qui permettent d'atteindre ce résultat, mais aucun n'est capable de s'adapter aux impératifs absolus de l'invention, notamment en matière de coût, d'encombrement, et considérations analogues.

Selon encore un mode de réalisation préféré, ledit transistor darlington est également polarisé par des composants électroniques identiques ou différents des précédents et sélectionnés et agencés pour que son déclenchement ne nécessite qu'un très faible courant de polarisation, de l'ordre de quelques micro Ampères.

Ainsi, non seulement le dispositif présente une consommation nulle ou quasi nulle au stockage ou hors usage, mais de plus il peut activer la ou les sources lumineuses instantanément ou quasi instantanément soit après un long stockage, c'est à dire à la première utilisation, soit lors de plusieurs usages successifs rapprochés, soit lors de plusieurs usages séparés par des périodes longues de non utilisation.

L'un des problèmes techniques posés par les dispositifs jetables lumineux était leur inertie prévisible à l'allumage, naturellement anti-commerciale, si l'on cherchait à réduire leur consommation d'énergie au repos. L'invention résout donc aussi ce problème.

Naturellement, on peut aussi prévoir que le contact réalisé par les capteurs d'allumage / extinction 19 réalisent non pas un allumage, mais une extinction; par exemple, le verre vide est lumineux, et il s'éteint si on y verse un liquide.

D'autres caractéristiques et avantages de l'invention seront mieux compris à la lecture de la description qui va suivre, et en se référant au dessin annexé sur lequel:

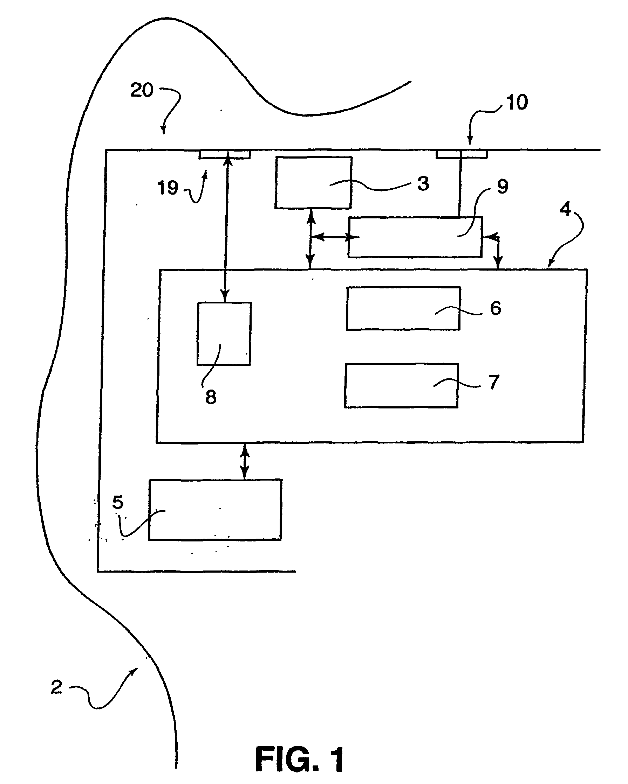

- la figure 1 représente le schéma général d'un dispositif selon l'invention, avec éventuellement un boîtier et une intégration dans un article

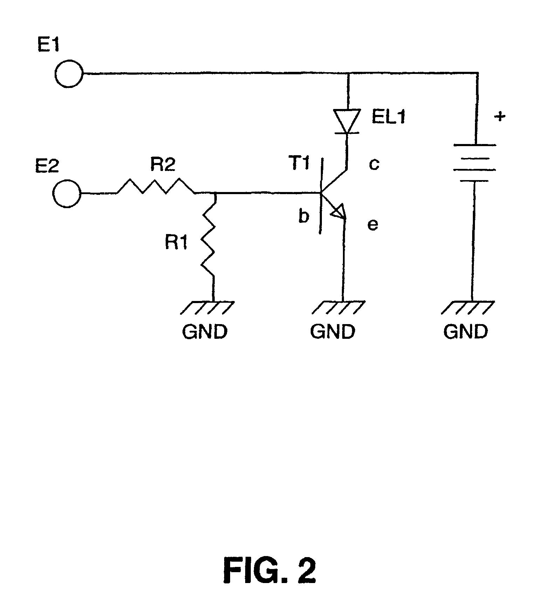

- la figure 2 représente le schéma électronique de l'exemple de réalisation non limitatif ci-dessous.

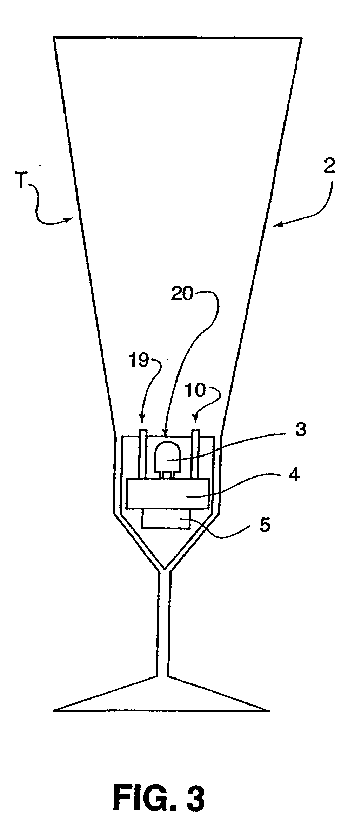

- la figure 3 représente une application non limitative de l'invention, à savoir:
   - un verre 2 dont la partie supérieure T est transparente ou translucide, et dont le fond comporte un module 20 contenant le dispositif lumineux selon l'invention.

Le matériau constitutif du verre est quelconque, en fonction du prix de revient visé, comme verre, cristal, polycarbonate, résine, autres matières plastiques, etc....

Ce dispositif lumineux est intégré par tout moyen au verre, à la fabrication, par collage, inclusion dans la résine etc....

Les références 20, 10, 19, 3, 4, 5 ont les significations indiquées plus haut.

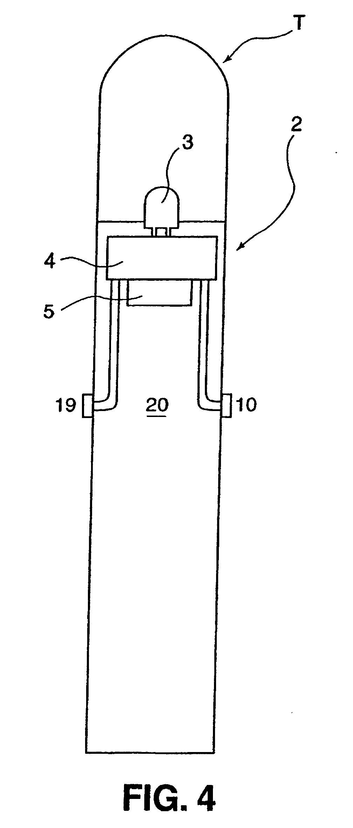

- la figure 4 représente une application non limitative de l'invention, à savoir:
   - un briquet ou briquet pour concert 2 dont la partie supérieure T est transparente ou translucide, et dont le corps comporte un module 20 contenant le dispositif lumineux selon l'invention.

Le matériau constitutif du « briquet » est quelconque, en fonction du prix de revient visé, comme polycarbonate, résine, autres matières plastiques, etc....

Ce dispositif lumineux est intégré par tout moyen au corps, à la fabrication, par collage, inclusion dans la résine etc....

Les références 20, 10, 19, 3, 4, 5, 2 ont les significations indiquées plus haut.

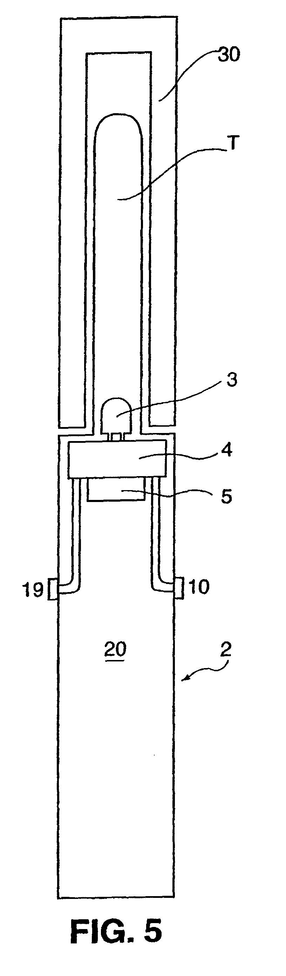

- la figure 5 représente une application non limitative de l'invention, à savoir:
   - une friandise comme une sucette ou analogue 2 dont la partie supérieure T est transparente ou translucide et est entourée d'un sucre coloré 30 qui sera capable de transmettre la luminosité de la source lumineuse 3, et dont le corps comporte un module 20 contenant le dispositif lumineux selon l'invention.

Le matériau constitutif du corps de l'article est quelconque, en fonction du prix de revient visé, comme polycarbonate, résine, papier comprimé, carton, autres matières plastiques, etc....

Ce dispositif lumineux est intégré par tout moyen au corps, à la fabrication, par collage, inclusion dans la résine etc....

Les références 20, 10, 19, 3, 4, 5, 2 ont les significations indiquées plus haut.

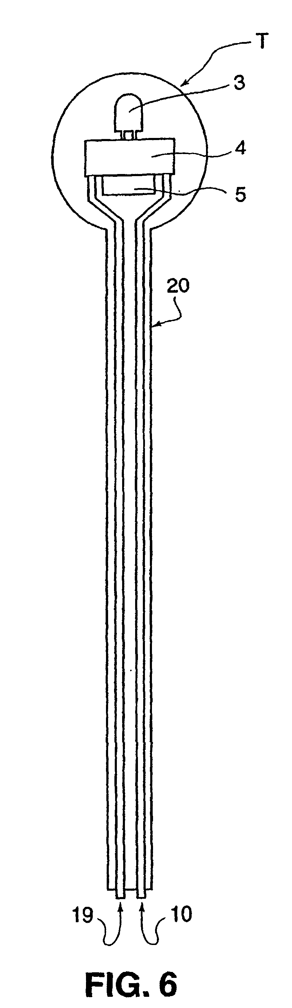

- la figure 6 représente une application non limitative de l'invention, à savoir:
   - un dispositif d'éclairage ou de balisage au sol 2 dont la partie supérieure T est transparente ou translucide, et dont le corps comporte un module 20 contenant le dispositif lumineux selon l'invention.

Le matériau constitutif de l'article est quelconque, en fonction du prix de revient visé, comme polycarbonate, résine, autres matières plastiques, bois, etc....

Ce dispositif lumineux est intégré par tout moyen au corps, à la fabrication, par collage, inclusion dans la résine etc....

Les références 20, 10, 19, 3, 4, 5, 2 ont les significations indiquées plus haut.

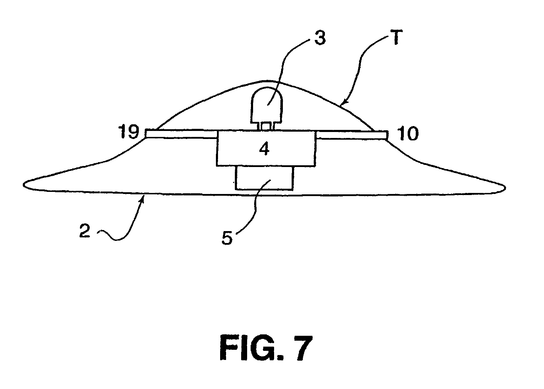

- la figure 7 représente une application non limitative de l'invention, à savoir:
   - un détecteur de baisse de niveau de liquide 2 dont la partie supérieure T est transparente ou translucide, et dont le corps comporte un module 20 contenant le dispositif lumineux selon l'invention.

Le matériau constitutif de l'article est quelconque, en fonction du prix de revient visé, comme polycarbonate, résine, autres matières plastiques, etc....

Ce dispositif lumineux est intégré par tout moyen au corps, à la fabrication, par collage, inclusion dans la résine etc....

L'article est placé par exemple dans un bol d'eau pour animaux domestiques ou d'élevage en plein air comme les volailles etc.... et sa densité est calculée pour qu'il ne flotte pas. L'électronique est adaptée pour que la source lumineuse 3 ne s'allume pas tant que le niveau de l'eau est au dessus du plan des capteurs 19, c'est à dire tant que l'eau ferme le circuit. Dès que le circuit s'ouvre par absence d'eau, la source lumineuse s'allume.

Les références 20, 10, 19, 3, 4, 5, 2 ont les significations indiquées plus haut.

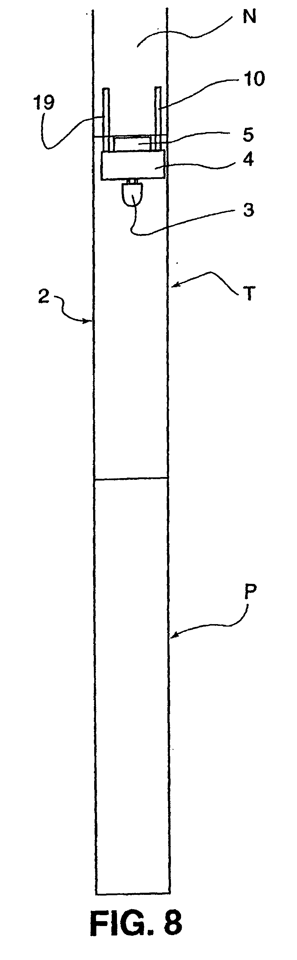

- la figure 8 représente une application non limitative de l'invention, à savoir:
   - un dispositif d'éclairage 2 de type flambeau, par exemple pour descente à skis aux flambeaux, dont la partie intermédiaire T est transparente ou translucide, et dont le corps comporte un module 20 contenant le dispositif lumineux selon l'invention, avec une poignée P. N désigne, au sommet, un magasin à neige, celle ci fermant le contact et déclenchant l'allumage. pour allumer, il suffit donc de placer un peu de neige dans le volume N.

Le matériau constitutif de l'article est quelconque, en fonction du prix de revient visé, comme polycarbonate, résine, autres matières plastiques, bois, etc....

Ce dispositif lumineux est intégré par tout moyen au corps, à la fabrication, par collage, inclusion dans la résine etc....

Les références 20, 10, 19, 3, 4, 5, 2 ont les significations indiquées plus haut.

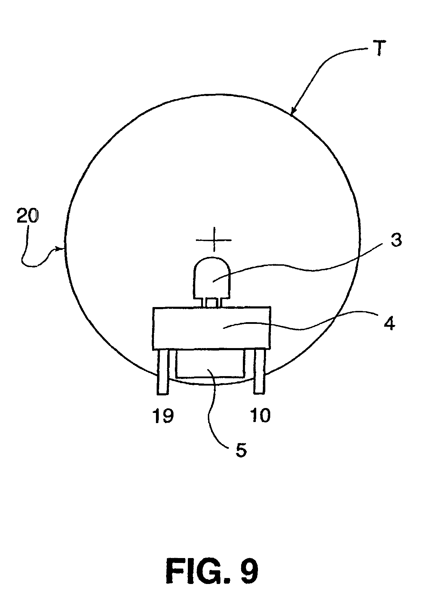

- la figure 9 représente une application non limitative de l'invention, à savoir:
   - un dispositif d'éclairage 2 pour agrémenter la surface des piscines et autres plans d'eau, dont la partie supérieure T est transparente ou translucide, et dont le corps comporte un module 20 contenant le dispositif lumineux selon l'invention.

La densité de l'ensemble est calculée pour que l'article flotte à la surface. On pourrait aussi envisager un article plus lourd qui coulerait, mais les applications sont moins nombreuses (aquariums, etc...)

Le matériau constitutif de l'article est quelconque, en fonction du prix de revient visé, comme polycarbonate, résine, autres matières plastiques, etc....

Ce dispositif lumineux est intégré par tout moyen au corps, à la fabrication, par collage, inclusion dans la résine etc....

Les références 20,10,19, 3, 4, 5, 2 ont les significations indiquées plus haut.

### EXEMPLE :

### (FIGURE 2)

Le montage électronique selon l'invention est constitué d'un transistor "Darlington" de type BCV27 de chez Fairchild™ ou BC 517 de chez Motorola™ ou Philips™ (t1) ayant sa base (b) polarisée vers le négatif de l'alimentation (gnd) par une résistance de forte valeur (r1) le maintenant en état de blocage (conduction nulle) au repos.

Lors de l'établissement d'une quelconque conduction même infime, entre la base (b) au travers de la résistance de limitation (r2) de moyenne valeur, entre l'électrode (e1), et l'électrode (e2) reliée au pôle positif de l'alimentation (+), le transistor (t1) devient conducteur et alimente la diode électroluminescente (el1) connectée entre son collecteur (c) et le positif de l'alimentation (+), l'émetteur (e) de (t1) étant lui connecté au négatif de l'alimentation (gnd).

Pour résumer, le transistor (t1) est totalement bloqué au repos (stockage ou hors usage) et ne laisse passer aucun courant entre son collecteur (c) et son émetteur (e). La diode électroluminescente (el1) connectée au positif de l'alimentation (+) ne consomme aucun courant

L'invention concerne tout article caractérisé en ce qu'il comporte un dispositif tel que décrit ci-dessus et intégré par tout moyen à la fabrication, par collage, inclusion dans la résine etc....

L'invention concerne tout article de ce type caractérisé en ce que le matériau constitutif de l'article est quelconque, comme verre, cristal, polycarbonate, résine, autres matières plastiques, papier comprimé, carton, bois, etc....

Les applications de l'invention sont multiples et concernent tous les petits objets ou articles où il est intéressant, ludique ou utile d'intégrer un dispositif lumineux jetable mais de longue durée d'utilisation, comme par exemple, à titre naturellement non limitatif :
- verres, coupes, chopes, flacons, bouteilles, (contact par le liquide ou la main) ...
- briquets, bougies, stylos, tubes individuels à extrémité lumineuse pour les spectateurs de concerts, remplaçant l'allumage de briquets, ...
- balisage au sol, au mur ou au plafond, par piquetage de petites lumières,
- éléments décoratifs comportant de tels piquetages lumineux,
- jouets
- articles flottants pour décorer une piscine (contact par l'eau)
- cendriers (contact par la chaleur)
- tiges pour sucettes et autres friandises
- décoration de paquets-cadeaux (contact à l'ouverture du paquet par exposition dune cellule à la lumière ambiante)
- décoration lumineuse pour vêtements, cheveux, etc....
- tiges à extrémités lumineuses ou à corps lumineux éventuellement scintillant, pour parades, descentes à ski « aux flambeaux », etc.....
- marquage lumineux pour colliers d'animaux domestiques,
- détecteurs de manque d'eau par exemple dans des gamelles pour animaux domestiques, oiseaux, bacs à fleurs à réserve d'eau, etc....
- détecteurs de niveau de solides (contact, lorsque le niveau du solide tombe au dessous d'une valeur prédéterminée, par activation d'une cellule photoélectrique par la lumière auparavant masquée par la présence du solide; par exemple, graines pour oiseaux, granulés pour animaux, produits industriels en granulés, etc....)
- et analogues.

L'invention concerne tous ces articles ainsi que les applications et articles qui apparaîtront clairement à l'homme de métier.

L'invention couvre également tous les modes de réalisation et toutes les applications qui seront directement accessibles à l'homme de métier à la lecture de la présente demande, de ses connaissances propres.w

## Revendications

1. Dispositif lumineux 1 autonome de petite ou très petite dimension, adaptable ou intégrable à des articles 2, du type comportant au moins une source lumineuse 3, au moins une électronique 4 intégrée de commande, et au moins une source d'énergie 5, **caractérisé en ce que** ladite électronique de commande comprend
- un moyen 8 commandant l'allumage et l'extinction du ou desdites sources lumineuses en réponse à des excitations extérieures par l'intermédiaire de capteur(s) 19, ledit moyen 8 comprenant un transistor « darlington » qui est polarisé par des composants électroniques sélectionnés et agencés pour le maintenir en état de blocage au stockage ou hors usage du dispositif, avec par conséquent conduction nulle,
- et **en ce qu'**il comporte un moyen 6 réduisant la consommation d'énergie de ladite électronique et du ou desdits élément(s) lumineux, au stockage et hors usage, à une valeur nulle.

2. Dispositif selon la revendication 1 **caractérisé en ce que** l'électronique de commande comporte un moyen 7 réduisant aussi l'inertie de ladite électronique et du ou desdits élément(s) lumineux, à l'allumage après période de non utilisation.

3. Dispositif selon la revendication 1 ou 2 **caractérisé en ce qu'**il est logé dans au moins un boîtier 20.

4. Dispositif selon l'une quelconque des revendications 1 à 3 **caractérisé en ce que** l'électronique 4 comporte également des moyens 9 accessoires de temporisation d'allumage et / ou d'extinction, de modulation de l'intensité lumineuse comme pour réaliser des scintillations, des éclairs, et effets spéciaux analogues, éventuellement en réaction (par un ou plusieurs capteur(s) 10) à des stimulations sonores et/ou visuelles et/ou thermiques, extérieures, comme par exemple synchronisation avec l'intensité sonore et/ou lumineuse ambiante, et effets analogues.

5. Dispositif selon la revendication 4 **caractérisé en ce que** lesdits capteurs 10 sont des capteurs d'intensité ou de contraste lumineux, de fréquences sonores comme un claquement de doigts, ou le niveau sonore ambiant, ou de variation de tels paramètres extérieurs.

6. Dispositif selon l'une quelconque des revendications 1 à 5 **caractérisé en ce que** les capteurs 19 peuvent être tout type de capteur capable d'envoyer un signal vers l'électronique 4 et plus précisément le module d'allumage / extinction 8, comme des capteurs d'humidité, de chaleur, ou des contacts fermant le circuit en présence d'un liquide conducteur.

7. Dispositif selon rune quelconque des revendications 1 à 6 **caractérisé en ce que** lesdits capteurs 19 et / ou 10 sont déportés à la surface de l'article 2 ou à proximité de la surface dudit article.

8. Dispositif selon l'une quelconque des revendications 1 à 7 **caractérisé en ce que** par consommation d'énergie nulle, on désigne des valeurs de consommation au stockage et hors usage qui sont soit nulles, soit extrêmement faibles, de l'ordre de 0,000 A / h à 0,00001 A/h, soit quelques microampères / h.

9. Dispositif selon l'une quelconque des revendications 1 à 8 **caractérisé en ce que** ledit transistor « darlington » est également polarisé par des composants électroniques identiques ou différents des précédents et sélectionnés et agencés pour que son déclenchement ne nécessite qu'un très faible courant de polarisation, de l'ordre de quelques micro Ampères.

10. Dispositif selon l'une quelconque des revendications 1 à 9 **caractérisé en ce que** on prévoit que le contact réalisé par les capteurs d'allumage /extinction 19 réalisent non pas un allumage, mais une extinction; par exemple, le verre vide est lumineux, et il s'éteint si on y verse un liquide.

11. Dispositif selon l'une quelconque des revendications 1 à 10 **caractérisé en ce que** le montage électronique est constitué d'un transistor "Darlington" de type BCV27 de chez Fairchild™ ou BC 517 de chez Motorola™ ou Philips™ (t1) ayant sa basé (b) polarisée vers le négatif de l'alimentation (gnd) par une résistance de forte valeur (r1) le maintenant en état de blocage (conduction nulle) au repos., et **en ce que**, lors de rétablissement dune quelconque conduction même infime, entre la base (b) au travers de la résistance de limitation (r2) de moyenne valeur, entre l'électrode (e1), et l'électrode (e2) reliée au pôle positif de l'alimentation (+), le transistor (t1) devient conducteur et alimente la diode électroluminescente (el1) connectée entre son collecteur (c) et le positif de l'alimentation (+), l'émetteur (e) de (t1) étant lui connecté au négatif de l'alimentation (gnd), le transistor (t1) étant totalement bloqué au repos (stockage ou hors usage) et ne laissant passer aucun courant entre son collecteur (c) et son émetteur (e) et la diode électroluminescente (el1) connectée au positif de l'alimentation (+) ne consommant aucun courant.

12. Article **caractérisé en ce qu'**il comporte un dispositif selon l'une quelconque des revendications 1 à 11 intégré par tout moyen à la fabrication, par collage, inclusion dans la résine.

13. Article selon la revendication 12 **caractérisé en ce que** le matériau constitutif de l'article est quelconque, comme verre, cristal, polycarbonate, résine, autres matières plastiques, papier comprimé, carton, bois.

14. Applications des dispositifs selon l'une quelconque des revendications 1 à 11 aux articles suivants
- verres, coupes, chopes, flacons, bouteilles, (contact par le liquide ou la main),
- briquets, bougies, stylos, tubes individuels à extrémité lumineuse pour les spectateurs de concerts, remplaçant l'allumage de briquets,
- balisage au sol, au mur ou au plafond, par piquetage de petites lumières,
- éléments décoratifs comportant de tels piquetages lumineux,
- décoration lumineuse pour vêtements, cheveux,
- jouets,
- articles flottants pour décorer une piscines (contact par l'eau),
- cendrier (contact par la chaleur),
- tiges pour sucettes et autres friandises,
- décoration de paquets-cadeaux (conact a l'ouverture du paquet par exposition d'une cellule a la lumière ambiante),
- tiges a extrémités lumineuses ou à corps lumineux éventuellement scintillant, pour parades, descente de ski aux flambeaux,
- marquage lumineux pour collier d'animaux domestiques,
- détecteur de manque d'eau par exemple dans les gamelles pour animaux domestiques, oiseaux, bacs a fleur à reserve d'eau,
- détecteur de niveau de solides (contact, lorsque le niveau du solide tombe en dessous d'une valeur prédéterminée, par activation d'une cellule photoélectrique par la lumière auparavant masquée par la présence du solide ; par exemple, graines d'oiseaux, granulés pour animaux, produits industriels en granulés).
- systême de sécurité divers, par exemple pour un objet, un animal ou une personne se trouvant en contact avec un liquide le syseme clignotte ou émet une lumière des qu'il se trouve dans l'eau (homme par dessus bord dans le nautisme, signalisation d'une bouée mise dans l'eau...).
- systême de déclenchement avec le liquide pour le pêche industrielle ou à titre de loisirs (le bouchon de pêche qui clignotte lorsque le poisson entraîne le bouchon dans l'eau et que le bouchon se trouve en

## Claims

1. A small or very small size glow-in-the-dark independent system (1), which could be adapted or integrated in articles (2) including at least a lighting source (3), at least a control electronic (4) and at least a power source (5). The control electronic is composed of:
- A device (8), which commands the illumination and extinction of the lighting source(s) in response to external stimuli through sensors(s) (19). The device (8) is composed of a "Darlington" transistor which is polarized using electronic components selected and adjusted to remain it in an inactive state (that means a conductivity of nil) when the system is stored or not in action
- A device (6), which reduces to nil the power and lighting source consumptions during storage or when the system is not in action.

2. The system according to paragraph 1 but **characterized by** the fact that the control electronic (4) is composed with a device 7, which reduces the time to get illuminated for the electronic system and for the lighting elements after a period of no use.

3. The system according to paragraph 1 or 2 **characterized by** the fact it is packaged in a box (20).

4. The system according to any one of the paragraph 1 to 3 **characterised by** the fact that the control electronic (4) is composed of a device (9), which can temporise the illumination and/or light extinction, modify the lighting intensity to create flashing lighting, sparks, and special similar effects, eventually in response to (with one or many sensor(s) (10)) sound, visual or temperature external stimulations, such as synchronisation with external sound intensity or external light intensity, and similar effects.

5. The system according to the paragraph 4 **characterized by** the fact that the sensors (10) are humidity sensors, or light contrast sensors, or sound frequency sensors reacting to stimuli such as a finger tap, or sound level in the room or variation of such external stimuli.

6. The system according to any one of the paragraph 1 to 5 **characterised by** the fact that the sensors (19) can be all types of sensors able to send a signal towards the electronic device (4) and more precisely the illumination/extinction module (8), such as humidity sensor, temperature sensor, or contact sensor which close the electrical circuit when a liquid is present.

7. The system according to any one of the paragraphs 1 to 6 **characterised by** the fact that the sensors (19) and/or (10) are located outside the surface of the article (2) or next to the surface of the article (2).

8. The system according to any one of the paragraph I to 7 **characterised by** the fact that the energy consumption nil means the energy consumption in storage or when the system is not in use is zero, or extremely low, from 0.000 A/h to 0.00001 A/h, or few micro amperes/h.

9. The system according to any one of the paragraphs 1 to 8 **characterised by** the fact that the "Darlington" transistor is also polarised with electrical components similar or different from the previous ones and selected and adjusted so that the illumination of the system requires a very small polarised current of few microamperes.

10. The system according to any one of paragraph 1 to 9 **characterised by** the fact that the any contact between sensors 19 will stop illumination, for instance, the empty glass will light up and the light disappear when the glass is filled up.

11. The system according to any one ofthe paragraph 9 to 10 **characterised by** the fact the electronic system is composed with a "Darlington" transistor type BCV27 from Fairchild™ or BC 517 from Motorola™ or Philips™ (t1) with its base (b), polarized to the negative side of the power supply (gnd) with a resistance of high value (r1), which maintained it in an inactive state (zero current) when the system is not in use.
When a current is appearing (even a small one), between the base (b) through the limiting resistance (r2) of medium value, between contact (e1) and contact (e2) linked with the positive side of power supply (+), the transistor (t1) becomes conductor and feeds the electro luminescent diode (el1) connected between its collector(c) and the positive side ofthe power supply (+), the emitter (e) from (t1) is connected to the negative of the power supply (gnd), the transistor (t1) is totally blocked when not in operation (storage or not in use) and does not let current go between its collector (c) and its emitter (e). The electro luminescent diode (el1) connected to the positive of the power supply (+) does not consume any current.

12. Articles **characterised by** the fact it includes a system according to paragraph 1 to 11 integrated by various technologies (glue, resin embedding)

13. Articles according to paragraph 12 **characterised by** the fact the material which composed the products can vary, such as glass, crystal, polycarbonate, resin, other plastic material, compressed paper, cardboard, wood.

14. Application of the system to any of the following items:
- Glasses, cups, mugs, flasks, bottles (contact by the liquid or by the hand)
- Lights, candles, pens, individual light sticks for concert viewers.
- Indication of ground, wall or ceiling by fixing the light sticks to this places.
- Decorative products
- Toys
- Floatable articles for swimming pool decoration (contact with water)
- Ashtray (contact with the temperature)
- Pacifier and other sweets for babies
- Decoration of present boxes (contact when the present is opened by exposure of the sensor to the light)
- Luminous decoration for the clothes, hair.
- Sticks or torches eventually flashing, for parades, ski slopes.
- Glow belt for domestic animals
- Detector of water absence for instance in water dishes for domestic animals, birds, flower vase with water level
- Detector of a level of a solid (contact, when the level of the solid is below a chosen level, by activating a photoelectric cell with the daylight previously hidden by the presence of the solid). For instance birdseed, dried animal food, industrial products in a granular shape
- Fishing buoy, which lights up as soon as the fish is caught and the buoy sensors are in contact with the water.
- Safety sticks which light up when they are in contact with the water (man overboard signal system)

## Patentansprüche

1. Autonome Vorrichtung Leuchtende mit kleinen oder sehr kleinen Größen passender oder intergrierbar im Artikel 2 der Typ, der mindestens eine Lichtquelle 3 und mindestens eine Bestellung integriert Elektronik 4 und Mindestens eine Energiequelle 5. umfasst Darin, die Bestellung das obenerwähnte Elektronik charakterisiert:
- Ein Mittel 8, bestellt die Einschaltung und die Ausschaltung der obenerwähnte Lichtquellen äußerlicher Aufregungen vom Vermittler Fühlers 19. Obenerwähntes Mittel 8, das einen Transistor «darlington» einschließt der polarisiert von elektronischen Bestandteilen ausgewählte ist und angeordnet, um im Blockiert Zustand für Lagerung oder außergebrauch der Vorrichtung. Infolgedessen gibt es keine Leitung.
- Er umfasst ein Mittel 6, das den Energieverbrauch reduziert zu nulle Wert der obenerwähnten Elektronik und des obenerwähntes leuchtende Elements in der Lagerung und außer gebrauch.

2. Vorrichtung nach der Anforderung 1 das die Elektronik Bestellung charakterisiert ein Mittel 7 des obenwähntes Elements das nach einer unbenutzen Periode der Züdung die obenwähntes Elektronik reduziert

3. Vorrichtung Nach der Anforderung 1 oder 2 charakterisiert, daß es in mindestens einem Gehäuse 20 untergebracht wird

4. Vorrichtung nach nebensächlichen Anforderungen 1 bis 3 charakterisiert, daß die Elektronik 4 gleichermaßen Mittel 9 Zubehörteile umfasst Temporisation der Zündung und oder der Löschung, der Modulation der Intensität Lichtquelle bei Funkeln, Blitze zu realisieren besondere ähnliche eventuelle in Reaktion (von einem oder vielen Fühlers 10) in sonoren und/oder visuellen und / oder warme Äußerliche Stimulierungen wie zum Beispiel Synchronisation mit der sonoren Intensität und / oder leuchtender umgebender, und ähnlichen Wirkungen.

5. Vorrichtung nach der Anforderung 4 charakterisiert das obenerwähnte Fühler 10 sind Fühler der intensität, leuchtenden Kontrastes, oder sonore Häufigkeiten wie ein Knall von Fingern, oder das sonore Wert oder andere Variation der äußerlichen Parameter.

6. Vorrichtung nach der nebensächlichen der Anforderungen 1 bis 5 charakterisiert daß die Fühler 19 könne viele Typs von Fühler sein: Fähiger ein Signal zur Elektronik 4 senden, moduliert ihn zur Zündung Löschung 8, wie Fühler der Feuchtigkeit der Hitze, oder Kontakte, die den Umkreis in Anwesenheit wen ein Fahrerliquid gibt.

7. Vorrichtung nach nebensächlichen der Anforderungen 1 bis 6 charakterisiert daß obenerwähnte Fühler 19 und / oder 10 in der Oberfläche des Artikels 2 deportiert werden oder in der Nähe der Oberfläche des Artikel.

8. Vorrichtung nach der nebensächlichen Anforderungen 1 bis 7 charakterisiert daß wen sehr venig Energieverbrauch gibt hindeutet Verbrauch bei Lagerung und außer gebrauch die Konsomation ist nulle oder sehr schwache in der Größenordnung von 0,000 A/h 0,00001 A/h so einige Mikroampere / Uhr.

9. Vorrichtung nach der nebensächlichen Anforderungen 1 bis 8 charakterisiert daß der Transistor "darlington" polarisiert ist von bestandteile elektronisch identisch oder gleichermaßen verschieden und angeordnet Ausgewählt damit seine Auslösung nur erfordert Sehr schwache Strömung der Polarisation in der Größenordnung von einigem Mikro Ampere.

10. Vorrichtung nach der nebensächlichen Anforderungen 1 bis 9 charakterisiert daß man vorhersieht daß der Kontakt, der von den Fühlers der Zündung verwirklicht wird, /Löschung verwirklichen 19 eine nicht Zündung, aber eine Löschung; zum beispiele ein leeres Glas wird erleuchtet. Und es geht aus, wenn man dort Flüssigkeit zugießt

11. Vorrichtung nach der nebensächlichen Anforderungen 1 bis 10 charakterisiert daß die elektronische Montage eines Transistors "Darlington" gegründet wird
Typ BCV27 des bei FairchiJdTM oder BC 517 des bei Motorola TM oder
Philips TM (t1,) die seine Gründung (b) polarisiert zur negativen Ernährung (Gnd) hat einen Widerstand starken Wertes (r1) jetzt im Zustand des Blockierens (keine Leitung) bei stillstand. Und bei einen geringenleitung selbst zwischen der Gründung (b) durch
Auflehnung oder Einschränkung (r2) mittelmäßigen Wertes zwischen der Elektrode (e1,) und die Elektrode (e2,) die mit dem Pluspol der Ernährung (+) verbunden wird, der Transistor (t1) versorge die elektrolichte Diode (el1) angeschlossen zwischen seinem Sammelkanal (c) und positive der Ernährung (+) der Sender (e) von (t1) verbinden mit der negativen der Ernährung (gnd) der Transistor (t1,) der ist bloquiert stillstand in der Erhelung (bei Lagerung oder außer gebrauch) und er läßt keine Strömung zwischen sein Sammelkanal einfließen (c) und sein Sender (e) und die elektrolichte Diode (el1,) an den positiven der Ernährung (+) auschlißen keine Strömverbrauch.

12. Artikel, charakterisiert daß er eine Vorrichtung die Nebensächlicher der Anforderungen umfasst 1 bis 11 auf beliebige Weise in der Herstellung integriert von Leimen Einschließung im Harz.

13. Artikel nach der Anforderung 12, der Baustoff charakterisiert Grundlegender Artikels ist nebensächlich, als Glas polycarbonate Harz, andere Kunststoffe, komprimiertes Papier, Pappe, Holz...

14. Anwendungen der Vorrichtungen nach nebensächlicher Anforderungen 1 bis 11 in den folgenden Artikeln
- Gläser, Schneiden, Humpen, Fläschchen, Flaschen (hat Kontakt von Flüssigkeit oder Hand)
- Feuerzeuge, Kerzen, Füllhalter, eigene Rohren an leuchtendem Ende Für Besucher ein Konzert, die die Zündung von Feuerzeugen ersetzen
- Markieren am Boden an der Wand oder auf der Decke von löchern von kleinen Lichten
- Dekorative Elemente, die mancher leuchtender Löchern umfassen.
- Leuchtende Dekoration für Kleidung, Haare
- Spielzeuge
- Schwimmente Artikel im Schwimmbäder zum dekorieren (Kontakt mit Wasser).
- Aschenbecher (Kontakt mit der Hitze)
- Stengel für Lutscher und andere Leckereien
- Dekoration von Paketen -Geschenken (Kontakt beim Öffnung des Paketes eine Zelle mit umgebenden Licht)
- Stengel mit leuchtende Enden oder in leuchtendem Körper eventuell bei Abstieg Paraden (Skies) mit funkelnden Fackeln.
- Leuchtende Markierung für Halsketten von Haustieren
- Detektor des Wassermangels zum Beispiel im Fressschalen von Haustiere, Vögel, Blumenschalen mit Wasserzurück.
- Detektor eines Gegenstands mit einer Fotocelle, die vorber von Licht verdeckt ist (zum beispiele Vögel Samen, Tier Samen, Samen für die Industrie)
- verschiedener Sicherheit System zum Beispiel für einen Gegenstand ein Tier oder Eine Person, die sich in Verbindung mit Flüssigkeit des System befindet, blinkt Oder strahlt ein Licht aus, sobald er sich im Wasser (Eine Person die vom Boot gefahlen ist, Signalisieren einer Boje, die im Wasser liegt wird,).
- Auslösung System mit Flüssigkeit für industrie der Fischerei oder Freizeit (der Korken des Firschers blinkt, wenn der Fisch den Korken im Wasser ziet und der Korken sich im Eintauchen befindet.
